# EUROPEAN PATENT APPLICATION

(11) **EP 3 572 704 A1**
(43) Date of publication of application: **27.11.2019**
(21) Application number: 19000241.0
(22) Date of filing: 16.05.2019
(51) Int. Cl.: F16L 33/03, B25B 27/14, B25B 25/00

(54) **SPRING CLAMP WITH TENSION RETAINING CLIP**

(30) Priority: 24.05.2018 BR 202018010581 U
(71) Applicant: Progeral Indústria de Artefatos Plásticos Ltda., 05428-040 São Paulo, Estado de São Paulo (BR)
(72) Inventor: VIEIRA DE CAMPOS, Marco Antonio, 05428-040 São Paulo, Estado de São Paulo (BR); VINICIUS VIVIAN, Rafael, 05428-040 São Paulo, Estado de São Paulo (BR)
(74) Representative: Ferreira Magno, Fernando Antonio

(57) **Abstract**

The present patent application refers to spring clamp (1) with tension retaining clip (20). It comprises: a steel annular belt (10) with external radial ends (12') and (13'); the clip (20) is formed with a retaining portion (21) provided with a retaining cutout (23) and an extraction ring (22); the ends (12'), (13') have perpendicular end portions (30), (31); the retaining portion (21) has the end opposite the extraction ring (22) provided with a perpendicular end portion (32), adjacent the free end of the end portion (30) and provided with a free end (33) supported on the steel annular belt (10); the cutout (23) has a bottom surface (34) overlapping the end portions (30), (31); the end of the opposing retaining portion (21) has retaining tooth (35) adjacent the free end of the end portion (31); the corners (36), (37) of the cutout (23) are at an acute angle.

## Description

### INTRODUCTION

This descriptive report refers to a utility model patent of a spring clamp with tension retaining clip, belonging to the field of fastening devices which has been arranged to have better use relative to the known similar, especially with regard to extraction of the tension retention clip.

### STATE OF THE ART

Spring clamps are already known, comprising: an annular steel belt, one end of which is formed by a central perimeter slot and two portions lateral to the slot and the opposite end is configured by a narrow passage which is inserted in the slot; said portions lateral to the slot and the narrow portion inserted in the slot have radially outwardly extending portions constituting clamp tensioning ends; said spring clamp is further formed by a clip comprised of a retainer portion which retains the tensioning ends of the annular belt and steel at a position close to one another, wherein said annular steel belt is tensioned and has a larger diameter, which position constitutes a stand-by position for application on a receiving surface; said clip being further formed by an extraction ring in which the user inserts the index finger and pulls the clip to disassemble it from the steel ring belt and this, by the spring effect, has its narrower end more inserted into the slot of the opposing end, whereby said steel annular belt has a smaller diameter and tightens around the receiving surface and the radial tensioning ends of said annular belt and steel are more distant from each other.

This type of clamp is applied, for example, around the end of a hose that has to be attached to the end of a pipe or nozzle or the like. Such a clamp can be seen in U.S. Patent 5,615,457.

In spite of the fact that this type of clamp is efficient, a disadvantage can be attributed to it, requiring the user to make a lot of effort to extract the tension retaining clip. This can be a serious problem, for example, in a vehicle assembly line, where a large number of clamps have to be assembled, requiring a lot of effort for assembly line operators.

Thus, a solution to this problem has been desirable.

### OBJECTIVES OF THE PROVISION

Thus, the purpose of the present utility model patent is to provide a spring type clamp with tension retaining clip which overcomes the problem of the above-mentioned prior art.

Another objective is to provide a spring clamp that beyond surpassing the problem is not therefore made or produced with levels of complexity that makes it uninteresting in the face of the usual ones.

Another objective is to provide a cost-effective clamp.

### SUMMARY DESCRIPTION OF THE PROVISION

In view of the foregoing problem, in order to overcome it and in order to meet the related objects, the provision introduced in a spring clamp with tension retaining clip, object of the present patent, has been developed, which is understood by the usual steel annular belt and tensioning retaining clip, said steel annular belt has the radial tensioning ends provided with perpendicular end portions facing opposite sides; the retaining clip is formed by a retaining portion and an extraction ring, said retaining portion having the opposite end to that containing the extraction ring provided with a perpendicular portion provided with a free end facing the annular steel belt, the retaining portion is further provided with a retaining cutout which is engaged in the end portions of the steel ring belt and the extraction ring of the clip has a larger diameter than usual, said clip, consisting of the end perpendicular portion, by the intermediate retaining segment and by the opposing end extraction ring constitutes a lever arm with support at the free end of the perpendicular end portion which is supported against the annular steel belt, said lever arm having a suitable length so that the force applied on the ring extraction is small and smaller than the force required to perform the same operation on conventional spring clamps.

This construction of the provision inserted in clamp spring with tension retaining clip overcomes the inconvenience with conventional similar clamps since the force applied to the clip extraction ring in the present clamp is less than the corresponding force applied on conventional similar clamps, thus meeting the main purpose of the provision.

In addition, this clamp presents construction and manufacture simple with respect to the usual and low cost meeting other objectives of the disposition.

### LIST OF DRAWINGS

The accompanying drawings refer to the provision inserted in clamp spring with tension retaining clip, object of the present patent, in which:
FIG. 1 shows the provision inserted in clamp spring with tension retaining clip and contains numerical references indicative of the usual constructive details of the clamp;
FIG. 2 shows the same figure as above, but having the numerical references indicative of details inserted in the clamp according to the present provision;
FIGS. 3 to 6 show a detail of the clamp with four construction variants of the clip retaining cutout in the annular steel belt; and

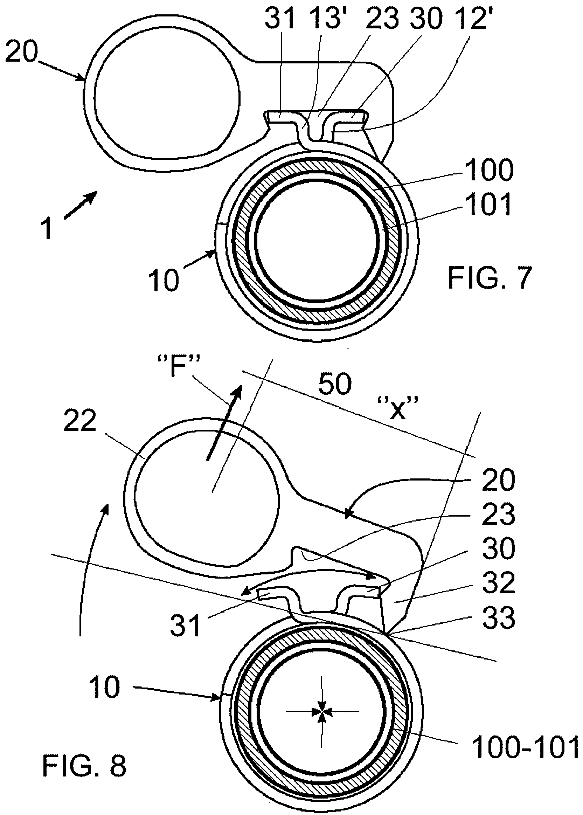

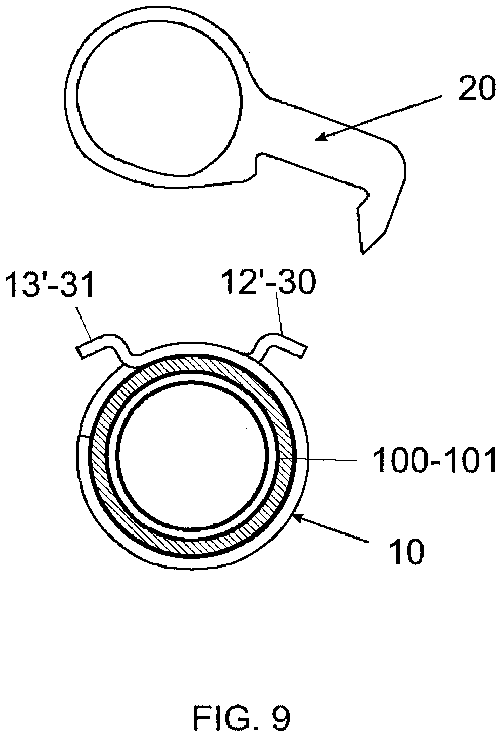

FIGS. 7 to 9 show the clamp and the indication of use, in which figure 7 is seen the clamp applied around the receiving surface of said clamp with it still in the tensioned position and with a diameter larger than the diameter of the receiving surface; FIG. 8 shows the clamp at the moment at which the tension retaining clip is extracted from the annular steel belt and that, by spring effect, begins to decrease in diameter and close around the receiving surface; and FIG. 9 shows the clamp in the position where the tensioning retaining clip is fully withdrawn from the annular steel belt and is closed and compressed against the receiving surface, securing it to the receiving surface.

### DETAILED DESCRIPTION BASED ON THE DRAWINGS

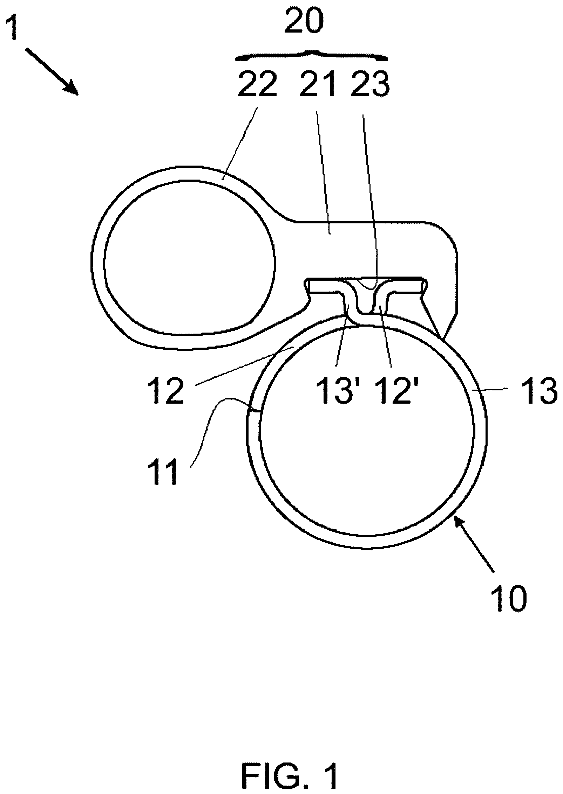

As illustrated in the figures above and is provided in the arrangement, the spring clamp 1, object of the present utility model patent, is comprised essentially (FIG. 1): by an annular steel belt 10, which is secured around the surface receptor; and by a tension retaining clip 20 of the annular steel belt 10, which keeps it tensioned and of a larger diameter prior to application to the receiving surface and that upon application thereto, said clip 20 is extracted and the steel ring 10, constitutive of the clamp, by spring effect, decreases the diameter and clamps around the receiving surface.

The annular steel belt 10 has one end provided with perimeter slot 11 and two belt portions 12 side to the slot 11 and the opposite end provided with narrow end portion 13 which is housed within the slot 11, said belt portions 12 side to the slot 11 and the opposing narrow end portion 13 are folded radially outwardly from the annular belt 10 constituting external radial radially extending ends 12' and 13'.

The clip 20 is a piece of injected plastic material, formed by a retaining portion 21 tangential to the annular steel belt 10; and by an extraction ring 22, incorporated in one of the ends of the retaining portion 21. Said retaining portion 21 is provided with cutout 23, within which are retained the tensioning ends 12' and 13' of the steel ring 10, arranged at a smaller distance from each other, condition in which said annular steel belt 10 presents tensioned and with a larger diameter, forming a stand-by position for mounting on a receiving surface. The extraction ring 22 is of sufficient diameter to receive the user's index finger from the clamp.

In this provision and thus constituting the principal object to be protected in the patent, the tensioning ends 12', 13' of the annular steel belt 10, the retaining portion 21 of the clip 20, the cutout 23 of the retaining portion 21, receiver of said tensioning ends 12', 13' and the extraction ring 22 of the clip 20 received new geometries, suitable to provide a suitable force system to decrease the force required for extracting the clip 20 from the tensioning ends 12', 13' of the annular steel belt 10, upon application of the spring clamp 1 on a receiving surface.

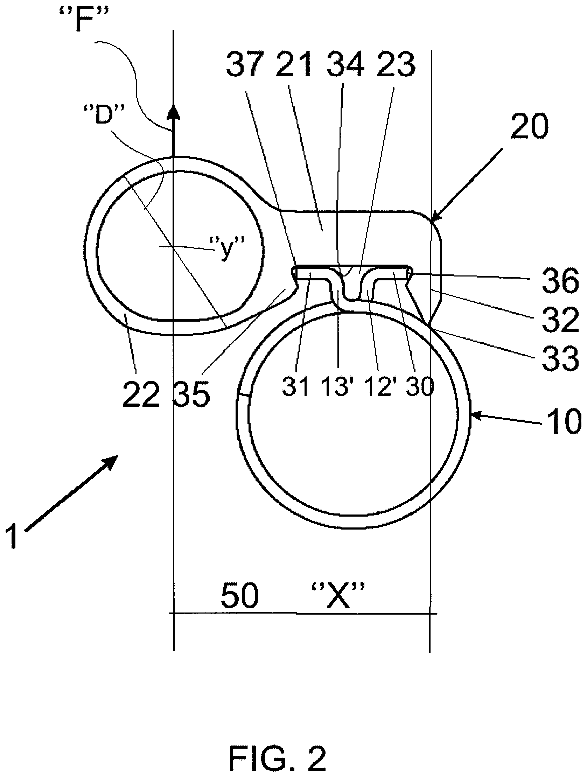

Thus, said tensioning ends 12', 13' (Figure 2) have perpendicular end portions 30, 31, respectively, facing in opposite directions and disposed in a tangential and spaced position relative to the annular steel belt 10.

The retaining portion 21 of the clip 20 has the opposite end to the extraction ring 22 provided with a perpendicular end portion 32, adjacent the free end of the end portion 30 and provided with a pivot free end 33 which abuts against the outer surface of the annular steel belt 10.

The cutout 23 has a bottom surface 34 that lies over the end portions 30, 31.

The end of the retention portion 21 opposite that containing the perpendicular end portion 32 and adjacent the extraction ring 22 has a retaining tooth 35 adjacent the free end of the end portion 31.

The corner 36 defined between the perpendicular end portion 32 and the bottom surface 34 of the cutout 23 and the opposite corner 37 defined there between and the retaining tooth 35 are at acute angle and therein the free ends of the end portions 30, 31 of the tensioning ends 12', 13' of the annular steel belt 10.

The extraction ring 22 has larger diameter "D" relative to the diameter of corresponding conventional spring clamp clip rings.

The clip 20, consisting of the perpendicular end portion 32, the intermediate retaining portion 21 and the opposing end extraction ring 22 of the clip 20, constitutes a lever arm 50 with pivot support at the free end 33 of the perpendicular end portion 32 and with drive in the extraction ring 22; said lever arm clip 20 has a length "X", measured between the free end of pivot 33 of the perpendicular end portion 32 and the center of curvature "Y" of the extraction ring 22, so that a small force "F" applied to the extraction ring 22 and with support at the pivot end 33 of the perpendicular end portion 32 is sufficient to disengage the cutout 23 of the clip 20 from the end portions 30, 31 of the tensioning ends 12', 13' of the annular steel belt 10, force 'F' is less than the force required for the same extraction operation of the clip in the like conventional spring clamps. The force "F" applied for the extraction of the clip 20 in the clamp 1 of the present provision is at most 66 N.

Although the angled corners 36 and 37 of the cutout 23 have the function of retaining the end portions 30, 31 of the tensioning ends 12', 13' of the annular steel belt 10 against the bottom surface 34 of the cutout 23 of the clip 20, said acute angle corners 36, 37 must to have profiles which, in collaboration with the resilience of the plastic material constituting the clip 20, favor the decoupling of said end portions 30, 31 when said clip 20 is drawn from its extraction ring 22.

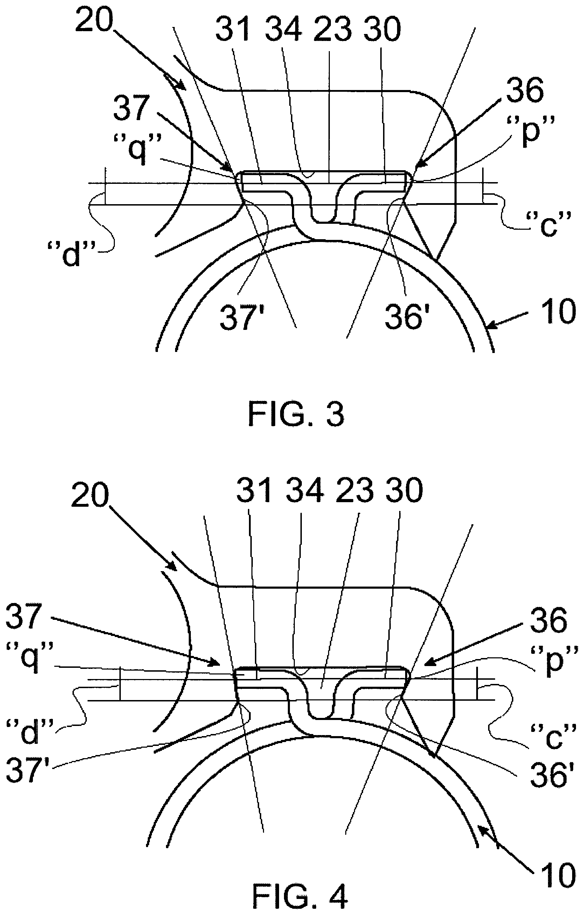

Accordingly, in an embodiment (FIG. 3), said corners 36, 37 have respective acute angles "p" and "q" and the retention ramps 36', 37' of said corners 36, 37, have equal lengths "c" and "d" suitable for projecting under the end portions 30, 31 providing retention thereof against the bottom surface 34 of the cutout 23.

In another embodiment (FIG. 4), the corner 36 has an acute angle "p" greater than the acute angle "q" of the opposite corner 37 and the retention ramps 36', 37' have lengths "c" and "d" are suitable to project under the end portions 30, 31 providing for their retention against the bottom surface 34 of the cutout 23.

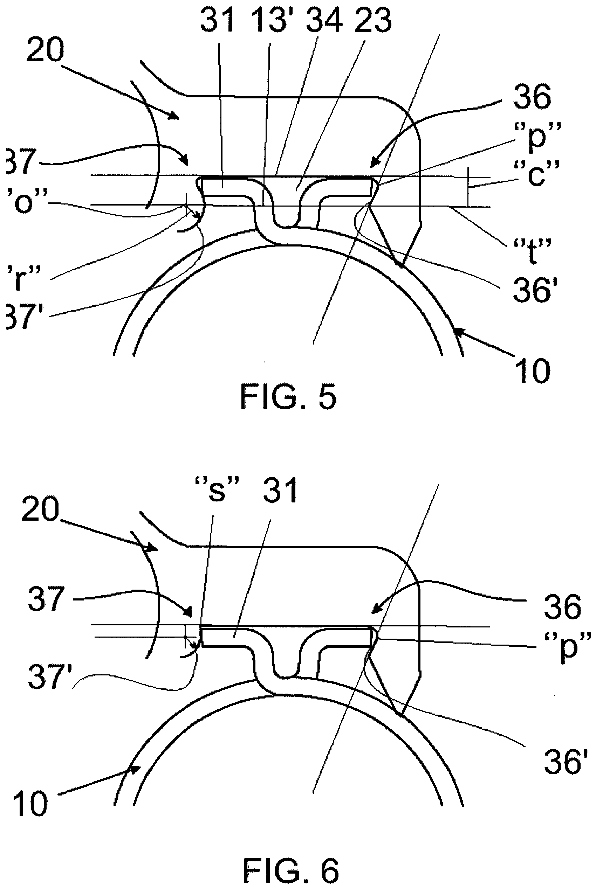

In another embodiment (Figure 5), the corner 36 has an acute angle "p" and a retaining ramp 36' with length "c" and the opposite corner 37 does not contain a retaining ramp and in substitution there is provided a raised surface with a center of curvature 'o' situated in the plane "t" which contains the free end of the holding ramp 36' and with a radius 'r' suitable for said bulging retaining surface 37' to project under the end portion 31 of the tensioning end 13' and holds said end portion 31 against the bottom surface 34 of the cutout 23.

In other embodiments (FIG. 6), the corner 36 has an acute angle "p" and a retaining ramp (36') with a length "c" and the opposite corner 37 has a right angle "s" and does not provide for a holding ramp, that there is provided a bulged surface 37' which is compressed against the free end of the end portion 31, thereby providing retention therein.

When in operation, initially said spring clamp 1 is tensioned and of greater diameter, configuring a stand-by position to be applied on a receiving surface 100, which may for example be a coupled hose and which must be fixed around the end of a tube 101. In this condition the cutout 23 of the clip 20 is attached in the perpendicular end portions 30, 31 of the tensioning ends 12', 13' of the annular steel belt 10, holding said end portions 30, 31 in the closest position to each other, in which the annular steel belt 10 is tensioned and has a larger diameter (Figure 7).

In order to apply the spring clamp 1 on the receiving surface 100, said spring clamp 1 is introduced around it, which introduction is possible because said spring clamp 1 is in the tensioned position and with a larger diameter than the receiving surface 100.

To attach the spring clamp 1 around the receiving surface 100 (Figure 8), the user inserts the index finger into the extraction ring 22 of the clip 20 and pulls it in, whereby the cutout 23 of said clip 20 is disengaged from the end portions 30, 31 of the steel ring 10 and this, by spring effect, decreases the diameter and tightens around said receiving surface 100, thereby providing the attachment between it and the surface 101.

When the clip 20 is pulled through its extraction ring 22, (FIG. 8) the free end 33 of the perpendicular end portion 32 of said clip 20 presses against the annular steel belt 10 and said free end 33 is actuated with a pivot point for the lever arm 50 constituted by the clip 20. As the extension of the lever arm 50 constituted by the clip 20 has the length "x" greater than the corresponding clip length of conventional spring clips, the force "F" that the user applies to extract the clip 20 from the spring clamp 1 of the present patent is a small force relative to the force applied in clip extraction from conventional spring clamps.

At the end of the total extraction of the clip 20 from the annular steel ring 10 constituting the clamp (FIG. 9), this, by spring effect, distends, decreases in diameter and closes around the receiving surface 100-101, position in which the tensioning ends 12'-30, 13'-31 are the longest distance from each other.

Within the above-described basic construction, spring clamp 1, object of the present invention, may present modifications relating to materials, dimensions, constructive details and/or functional and/or ornamental configuration, without leaving the scope of the requested protection.

Within this, the spring clamp 1 of the present provision can be constructed in several diameters to suit different applications.

## Claims

1. Arrangement inserted in spring clamp with tension retaining clip comprising: by annular steel belt (10); and by tension retaining clip (20) of the annular steel belt (10), it has one end provided with perimeter slot (11) and two belt portions (12) lateral to the slot (11) and the opposite end provided with narrow end portion (13) which is shelved within the slot (11), said belt portions (12) lateral to the slot (11) and the opposing narrow end portion (13) are folded radially outwardly from the annular belt (10) constituting external radial ends (12') and (13') of tensioning; the clip (20) is a piece of injected plastic material, formed by a retaining portion (21) tangential to the annular steel belt (10); and by an extraction ring (22), incorporated in one of the ends of the retaining portion (21), said retaining portion (21) is provided with a cutout (23) inside which the tensioning ends (12') are retained and (13') of the annular steel belt (10), arranged at a smaller distance from each other, a condition in which said annular steel belt (10) is tensioned and of greater diameter; the extraction ring (22) is of sufficient diameter to receive the index finger of a user, **characterized in that** the tensioning ends (12'), (13') have perpendicular end portions (30), (31) respectively facing in opposite directions and disposed in a tangential and spaced position relative to the annular steel belt (10); the retaining portion (21) of the clip (20) has the end opposite the extraction ring (22) provided with a perpendicular end portion (32), adjacent the free end of the end portion (30) and provided with a pivot free end (33) which rests against the outer surface of the annular steel belt (10); the cutout (23) has a bottom surface (34) that lies over the end portions (30), (31); the end of the retaining portion (21), opposite that containing the perpendicular end portion (32) and adjacent the extraction ring (22), has a retaining tooth (35) adjacent the free end of the end portion (31); the corner (36) defined between the perpendicular end portion (32) and the bottom surface (34) of the cutout (23) and the opposite corner (37) defined there between and the retaining tooth (35) are at an acute angle and the free ends of the end portions (30), (31) of the tensioning ends (12), (13) of the annular steel belt (10) are engaged and retained therein; the extraction ring (22) has larger "D" diameter relative to the diameter of corresponding conventional spring clamp clip rings; said clip (20) consisting of the perpendicular end portion (32), the intermediate retaining portion (21) and the opposing end extraction ring (22), constitutes a lever arm (50) with pivot support at the free end (33) of the perpendicular end portion (32), driven in the extraction ring (22) and having a length "X", measured between the pivot free end (33) of the perpendicular end portion (32) and the center of curvature "Y" of the extraction ring (22), suitable for a force "F" of at most 66 N applied to the extraction ring (22) and with a support at the pivot end (33) of the perpendicular end portion (32) to disengage the cutout (23) of the clip (20) from the end portions (30), (31) of the tensioning ends (12'), (13') of the annular steel belt (10).

2. Arrangement inserted in spring clamp with tension retaining clip according to claim 1, **characterized in that** the corners (36'), (37') have respective acute angles "p" and "q" and the retention ramps (36'), (37') of said corners (36'), (37') have equal lengths "c" and "d" suitable for projecting under the end portions (30), (31) and securing them against the bottom surface (34) of the cutout (23).

3. Arrangement inserted in spring clamp with tension retaining clip according to claim 1, **characterized in that** the corner (36) has an acute angle "p" greater than the acute angle "q" of the opposite corner (37) and the retention ramps (36'), (37') have lengths "c" and "d" suitable for projecting under the end portions (30), (31) and securing them against the bottom surface (34) of the cutout (23).

4. Arrangement inserted in spring clamp with tension retaining clip according to claim 1, **characterized in that** the corner (36) has an acute angle "p" and a retention ramp (36') having a length "c" and the opposite corner (37) does not contain a retention ramp and in replacement a resilient retaining surface (37) is provided with center of curvature "o" situated in the plane "t" containing the free end of the retention ramp (36') and with a radius "r" suitable for the said retaining curved surface (37) projects under the end portion (31) of the tensioning end (13') and retains it against the bottom surface (34) of the cutout (23).

5. Arrangement inserted in spring clamp with tension retaining clip according to claim 1, **characterized in that** the corner (36) has an acute angle "p" and a retaining ramp (36') with a length "c" and the opposite corner (37) has a right angle "s" and does not provide a ramp, whereby in substitution to it there is provided a rounded surface (37'), which is compressed against the free end of the end portion (31), providing retention therein.
